# EUROPEAN PATENT APPLICATION

(11) **EP 2 921 732 A2**
(43) Date of publication of application: **23.09.2015**
(21) Application number: 15159618.6
(22) Date of filing: 18.03.2015
(51) Int. Cl.: F16C 33/74, F16C 17/02

(54) **BEARING OUTER RACE HAVING A RADIALLY INWARDLY BIASED SEAL**

(30) Priority: 19.03.2014 US 201461955732 P
(71) Applicant: Roller Bearing Company of America, Inc., Oxford, CT 06478 (US)
(72) Inventor: Navarro, Alfredo, Norwalk, CT Connecticut 06851 (US)
(74) Representative: Israelsson, Stefan

(57) **Abstract**

A seal for a bearing has an annular body comprising polytetrafluoroethylene in a matrix including an elastomeric material. The seal includes a biasing member (124) that is in communication with the seal for urging a portion of the seal radially inward.

## Description

### Field of the Invention

The present invention relates generally to a bearing having an outer race that has a seal disposed therein and more particularly to radially inward biased seal that includes polytetrafluoroethylene (PTFE) in a matrix of an elastomeric material.

### Background of the Invention

Known bearings include journal bearings wherein a shaft is rotatably supported by an outer race, spherical bearings wherein a ball is rotatably held in an outer ring and roller bearings having rolling elements that are held between an inner race and an outer race. Seals are typically disposed between an outer member and inner member of the bearing to mitigate the ingress of contamination and debris into engagement surfaces between the inner member and the outer member. In some instances, oil or grease is provided to the engagement surfaces to reduce friction therebetween. The seals can mitigate the egress of the grease or oil from engagement surfaces of the inner member and the outer member. However, over time the seals can wear and sealing engagement with portions of the inner member and the outer member can become degraded or lost.

In some instances seals are manufactured from a synthetic rubber material. Synthetic rubber seals typically require relatively small areas of engagement with the bearing for proper sealing because of the relative high of the material. The small area of engagement creates high contact pressures over the contact area which results in increased friction to operate the bearing and accelerated wear of the contact area.

### Summary

There is disclosed herein a seal for a bearing. The seal has an annular body including polytetrafluoroethylene in a matrix that includes one or more elastomeric materials (e.g., a synthetic rubber). The seal includes a biasing member that is in communication with the seal for urging a portion of the seal radially inward.

There is also disclosed herein a bearing including an outer race having an interior area defined by an arcuate interior surface. The bearing includes an inner race defining an arcuate exterior surface that is complimentary to the arcuate interior surface. The inner race is disposed at least partially in the interior area and is rotatable relative to the outer race. The bearing includes an annular seal removably secured to the portion of the outer race. A portion of the seal slidingly engages a portion of the inner race. The seal includes polytetrafluoroethylene in a matrix that includes one or more elastomeric materials (e.g., a synthetic rubber). The seal is in communication with a biasing member which is configured to urge a portion of the seal radially inward.

According to one embodiment, the elastomeric material comprises a synthetic rubber.

According to one embodiment, the seal defines an annular retaining ring secured thereto.

According to one embodiment, the retaining ring is metallic.

The seal can be installed in new bearings or retrofit into existing bearings. Biasing of the seal against the inner race provides a maintenance free sealing feature.

### Description of the Drawings

FIG. 1 is cross sectional view of a journal bearing having a seal of the present invention therein;
FIG. 2 is a cross sectional view of the journal bearing of FIG. 1 taken across line 2-2;

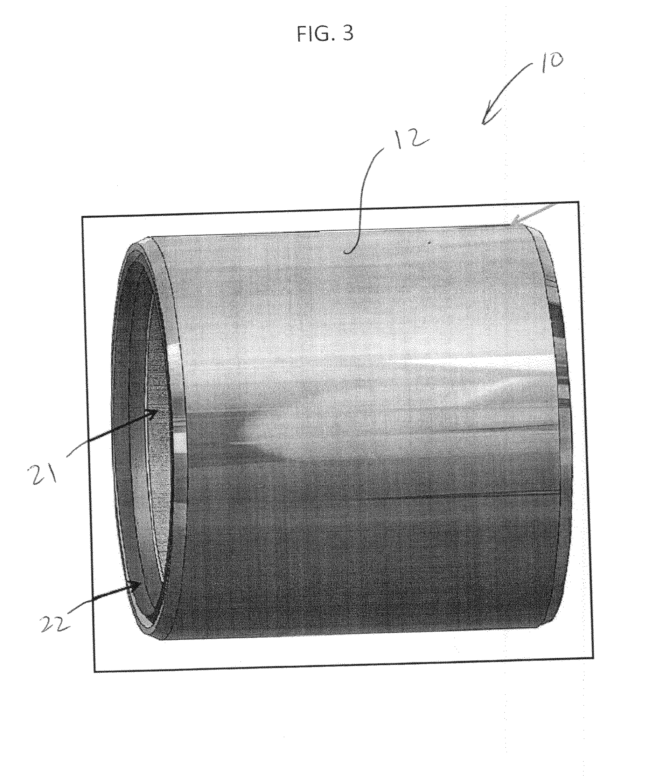

FIG. 3 is a perspective view of an outer race of the journal bearing of FIG. 1;
FIG. 4 is a cut away view of a portion of the outer race of FIG. 3;
FIG. 5 a perspective view of a portion of the outer race and seal of FIG. 1;
FIG. 6 is a schematic view of the seal of FIG. 1;
FIG. 7 is a schematic view of a portion of FIG. 5 showing the seal urged radially inward;
FIG. 8 is a cut away view of a portion of another embodiment of an outer race;
FIG. 9 a perspective view of a portion of the outer race and seal of FIG. 8;
FIG. 10 is an enlarged cross sectional view of the seal of FIG.9;
FIG. 11 is a cross sectional view of the journal bearing of FIG. 9 taken across line 11-11;
FIG. 12 is a perspective view of another embodiment of a seal having a double lip configuration;
FIG. 13 is an enlarged schematic view of a portion of the cross section of FIG. 10 showing a homogenous embodiment of polytetrafluoroethylene (PTFE) in a matrix that includes an elastomeric material; and
FIG. 14 is an enlarged schematic view of a portion of the cross section of FIG. 10 showing a non-homogenous embodiment of polytetrafluoroethylene (PTFE) in a matrix that includes an elastomeric material.

### Detailed Description of the Invention

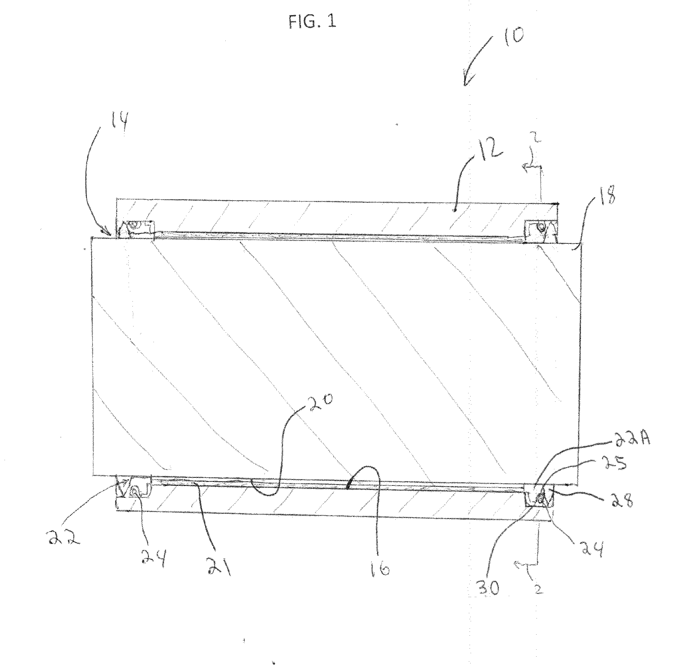

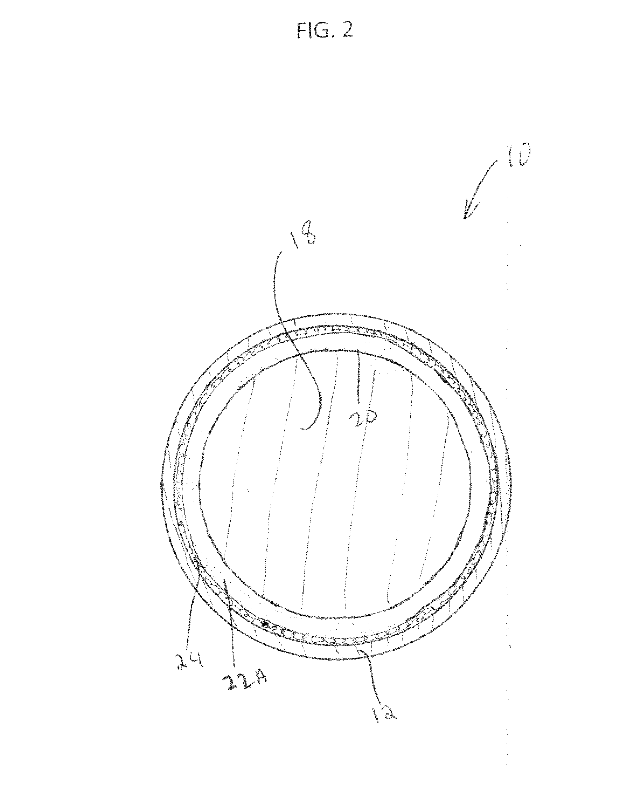

Referring to FIGS. 1 and 2, a bearing (e.g., a journal bearing) is generally designated by the numeral 10. The bearing 10 includes an outer race 12 having an interior area 14 defined by an arcuate interior surface 16. The bearing 10 includes an inner race 18 (e.g., a shaft) defining an arcuate exterior surface 20 that is complimentary to the arcuate interior surface 16. The inner race 18 is disposed partially in the interior area 14 and is rotatable relative to the outer race 12. In one embodiment, a polytetrafluoroethylene (PTFE) liner 21 is disposed between the interior surface 16 and the exterior surface 20. In one embodiment, the liner 21 is secured to the interior surface 16 and slidingly engages the exterior surface 20.

An annular seal 22 is removably secured (e.g., press fit into or interference fit) to a portion of the outer race 12.. The seal 22 includes an annular body 22A, a portion of which slidingly engages the exterior surface 20 of the inner race 18.

In one embodiment, the annular body portion 22A is manufactured from an elastomeric material, for example, a synthetic rubber matrix (e.g., nitrile rubber, Buna-N, Perbunan, acrylonitrile butadiene rubber, NBR, and synthetic rubber copolymers of acrylonitrile (CAN) and butadiene).

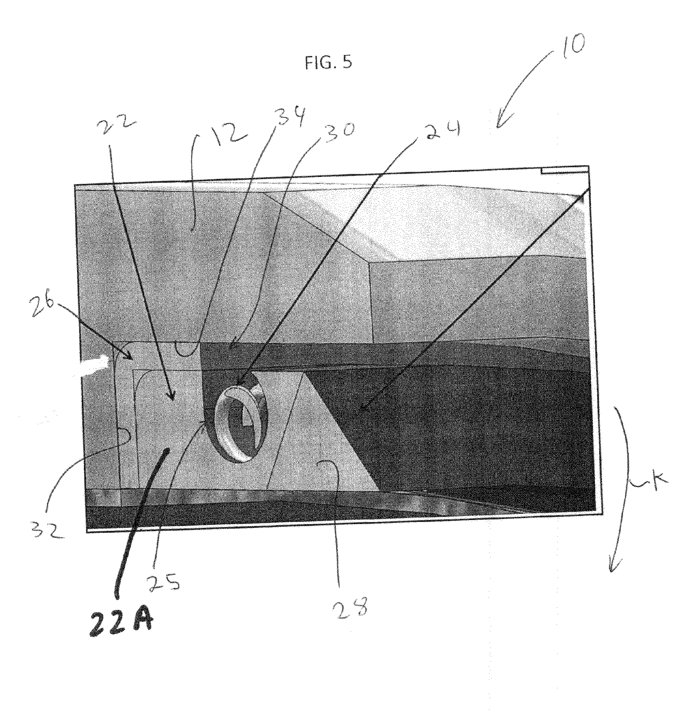

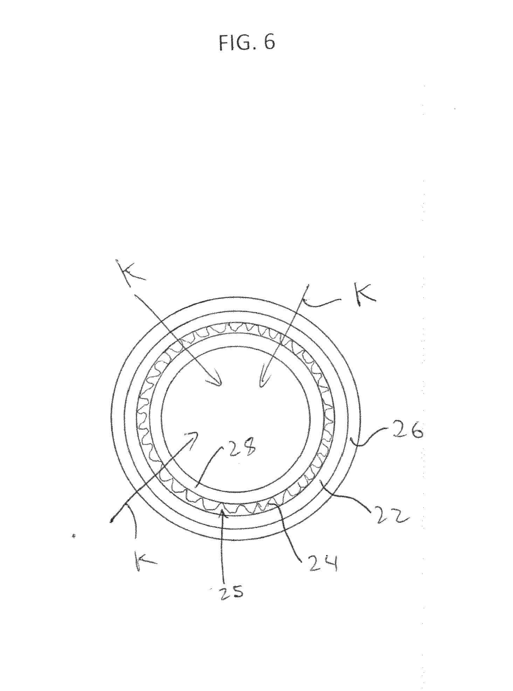

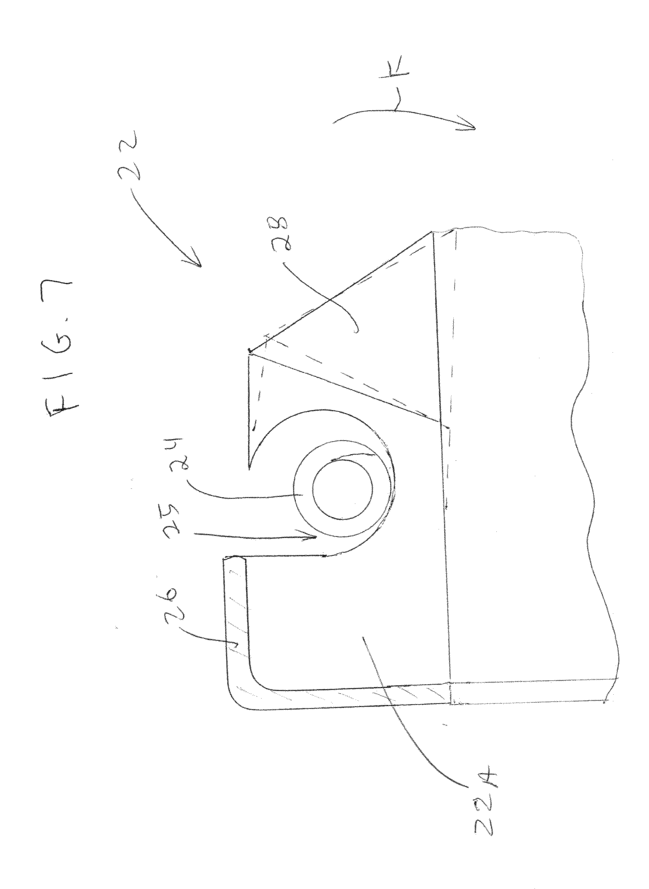

As shown in FIGS. 1 and 2, the annular body portion 22A is in communication with a biasing member 24 which is configured to urge a portion of the seal 22 (e.g., the PTFE wedge 28) radially inward in the direction of the arrows K as shown in FIGS. 5-7.

As shown in FIG. 5, the seal 22 defines a radially outward facing channel 25 therein and the biasing member 24 is positioned in the channel 25. In one embodiment, the biasing member 24 is a closed loop coil spring extending around the channel 25. In one embodiment, the biasing member 24 is manufactured from a stainless steel spring metal. In one embodiment, the biasing member 24 is manufactured from a high temperature resistant elastomeric O-Ring. While the biasing member 24 is shown and described as being a closed loop coil spring, a stainless steel spring or a high temperature resistant elastomeric O-Ring, the present invention is not limited in this regard as other types of biasing members may be employed, including but not limited to high temperature resistant elastomeric coil springs.

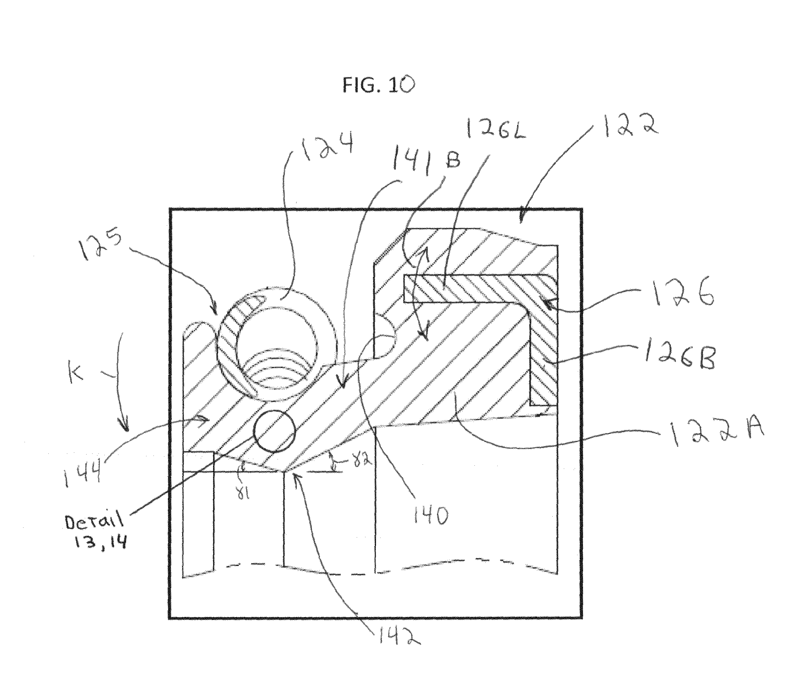

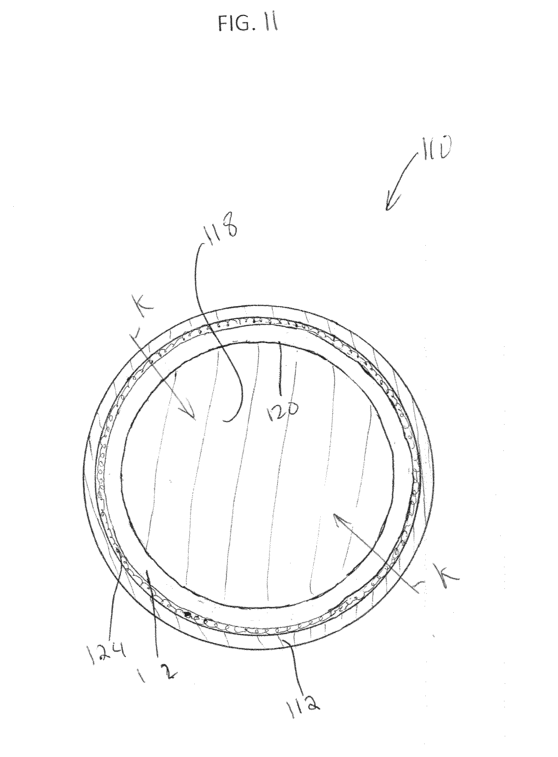

The seal 22 defines an annular retaining ring 26 (e.g., L-shaped) secured thereto. In one embodiment, the retaining ring 26 is manufactured from a metallic material. The seal 22 includes a PTFE wedge 28 secured (e.g., bonded) thereto. The PTFE wedge 28 is urged against the portion of the inner race to compensate for wear of the PTFE wedge as indicated by the arrows K in FIGS. 5-7. In one embodiment, the wedge 28 and/or annular body portion 22A has PTFE in a matrix of elastomeric material (e.g. a synthetic rubber or other elastomeric material as described herein with reference to FIGS. 10-14).

As shown in FIG. 5, the bearing 10 includes a recess 30 formed in opposing axial ends of the outer race 12. The recess 30 is defined by an axially outward facing shoulder 32 and a radially inward facing surface 34 of the outer race 12. The retaining ring 26 is secured to the seal 22 and is either friction fit or interference fit in the recess 30.

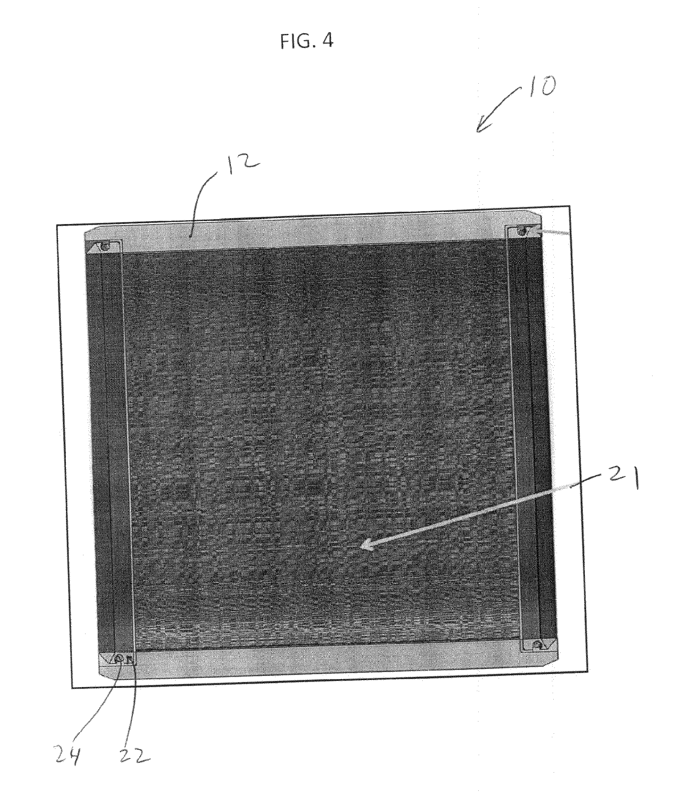

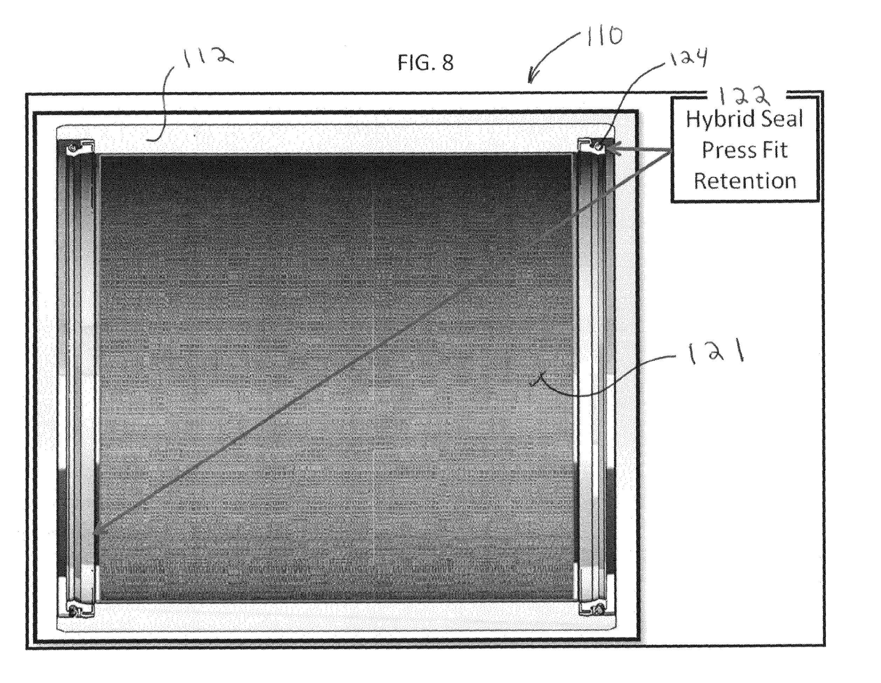

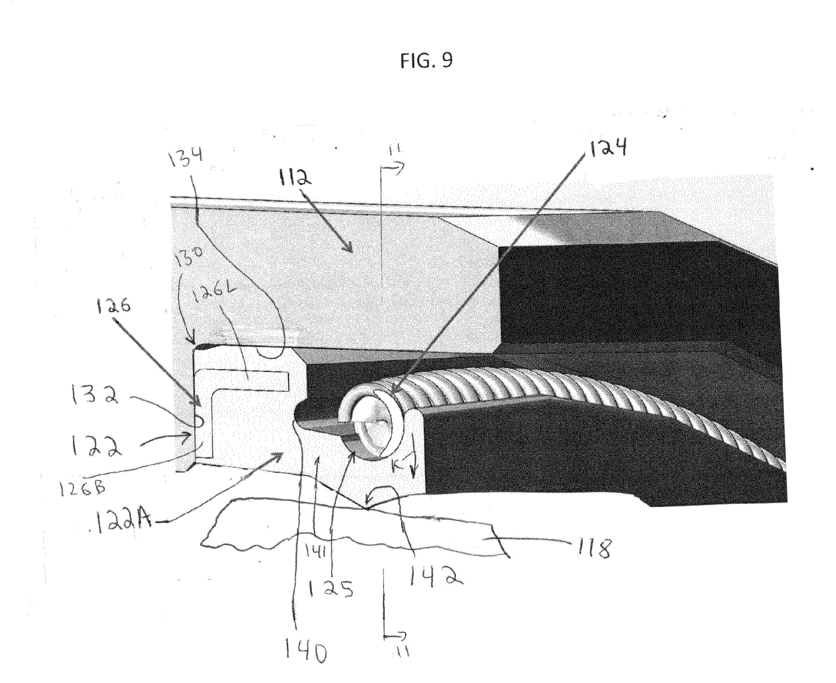

FIGS. 8-11 illustrate a seal 122 and bearing 110 similar to the seal 22 and bearing 10 of FIGS. 4-7 and are therefore designated with similar reference numbers preceded by the numeral 1. An annular seal 122 is removably secured to a portion of the outer race 112. A portion of the seal 122 slidingly engages a portion of the inner race 118. The seal 122 includes an annular body 122A portion and a head portion 144 connected to one another by a neck portion 141. A relief groove 140 is formed at a juncture of the annular body portion 122A and the neck portion 141 to facilitate flexure of the head portion 144 relative to the annular body portion 122A. In one embodiment, the relief groove 140 has a depth D1 and radius of curvature R1 of a magnitude sufficient to accommodate movement, misalignment of the outer ring 112 relative to the inner ring 118 and/or flexure of the head portion 144 relative to the body portion 122A. For example, larger magnitudes of the depth D1 and radius of curvature R1 of the groove 140 provides for greater degrees of misalignment of the outer ring 112 relative to the inner ring 118. The annular body portion 122A is in communication with a biasing member 124 which is configured to urge a portion of the seal 122 (e.g., the head portion 142) radially inward in the direction of the arrows K as shown in FIGS. 9-11. In one embodiment, the head portion 144 has a V-shaped cross section 142. The V-shaped section is configured having shallow angles γ1 and γ2 the magnitudes of which are minimized and predetermined to reduce contact pressure and increase wear resistance of the seal 122.

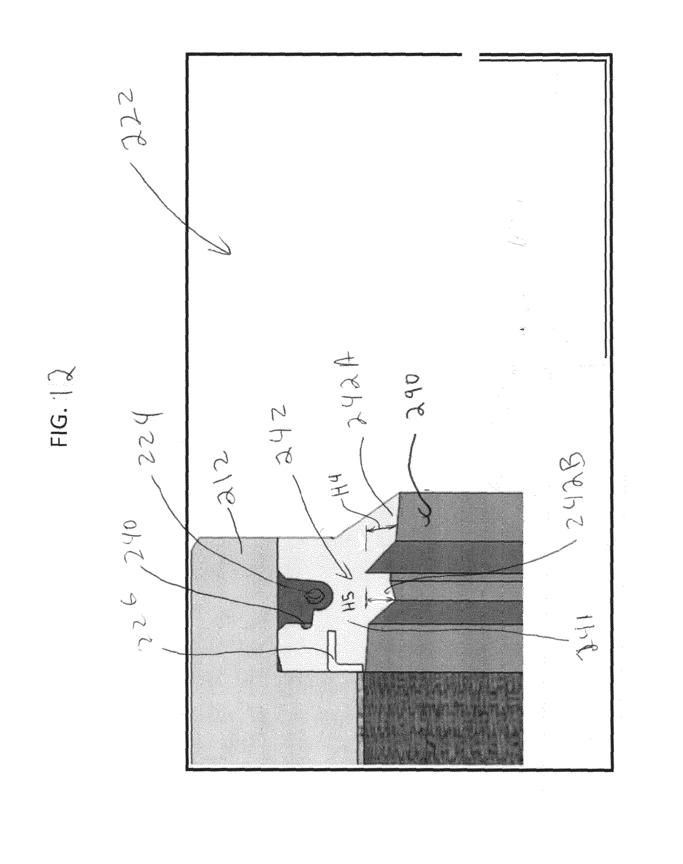

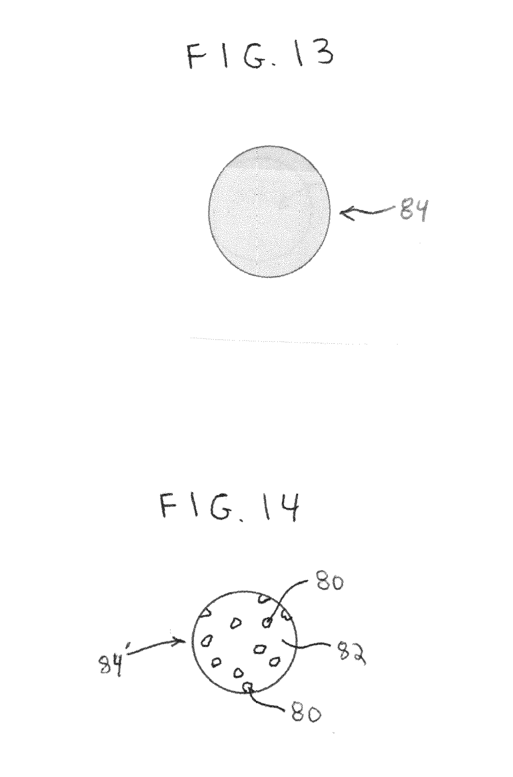

In one embodiment, the seal 122 of FIGS. 8-11 and the seal 22 of FIG. 12 includes polytetrafluoroethylene (PTFE) in a matrix that includes one or more elastomeric materials. The elastomeric materials include but are not limited to a synthetic rubber (e.g., nitrile rubber, Buna-N, Perbunan, acrylonitrile butadiene rubber, NBR and synthetic rubber copolymers of acrylonitrile (CAN) and butadine). In one embodiment, the PTFE is present in the matrix constitutes 5 to 20 percent by weight of the combined PTFE and the matrix. In one embodiment, the PTFE is present in the matrix and constitutes 5 to 10 percent by weight of the combined PTFE and the matrix and the combined PTFE and the matrix, collectively referred to as element 84, is in a homogenous form as shown in FIG. 13. In one embodiment, the PTFE is present in the matrix and constitutes 10-15 percent by weight of the combined PTFE and the matrix, collectively referred to as element 84' and the combined PTFE and the matrix is in a non-homogenous form as shown in FIG. 14. In the non-homogeneous form, the PTFE 80 is present in the form of particles, fragments, small pieces or pellets in the matrix r 82, as shown in FIG. 14. Based on significant experimentation and testing, the inventors have determined that the 5 to 20 percent by weight of the combined PTFE and the matrix provides superior wear resistance and lubricious qualities compared to formulations in which the PTFE is present in the matrix (e.g., an elastomeric material such as a synthetic rubber) at percentages greater than 20 percent by weight. For example, when PTFE is present in the matrix at percentages greater than 20 percent by weight the resultant material changes form, easily disintegrates and has little or no practical use as a material for seals. In one embodiment, the combined PTFE and the matrix 84, 84' has a Shore durometer hardness 50 to 70 on the Shore A scale.

As shown in FIG. 9, the seal 122 defines a radially outward facing channel 125 therein and the biasing member 124 is positioned in the channel 125. In one embodiment, the biasing member 124 is a closed loop coil spring extending around the channel 125. In one embodiment, the biasing member 124 is manufactured from a stainless steel spring metal. In one embodiment, the biasing member 124 is manufactured from a high temperature O-Ring.

The seal 122 defines an annular retaining ring 126 (e.g., L-shaped) secured thereto. In one embodiment, the retaining ring 126 is manufactured from a metallic material. A portion of the retaining ring 126 (e.g., one leg 126L) is embedded in the annular body portion 122A. The leg 126A is configured to elastically flex as indicated by the arrow B in FIG. 10 without plastically deforming.

As shown in FIG. 9, the bearing 110 includes a recess 130 formed in opposing axial ends of the outer race 112. The recess 130 is defined by an axially outward facing shoulder 132 and a radially inward facing surface 134 of the outer race 112. The retaining ring 126 is secured to the seal 122 and is either friction fit or interference fit in the recess 130. For example, another leg 126B of the retaining ring 126 is press fit into engagement with the axially outwardly facing shoulder 132.

Referring to FIG. 12, a seal 222 is similar to the seal 122 of FIG. 9. Therefore, similar elements are given similar reference numbers wherein the leading number "1" is replaced by the number "2". The seal 222 includes a double lip configuration defined by a truncated V-shaped lip 242A that defines a substantially flat surface 290 and defines a first height H4 and an adjacent V-shaped lip 242B that defines a second height H5. In one embodiment, the first height H4 and the second height H5 are equal so that when the V-shaped lip 242B wears away and can no longer effectively seal, the truncated V-shaped lip 242A then engages the inner ring 118 to provide sealing. In another embodiment, the V-shaped lip 242A provides a scraping function (e.g., is configured for scraping debris off of the inner ring 118) and the truncated V-shaped lip 242A is configured to seal and prevent water and debris from entering a space between the inner ring 118 and the outer ring 112.

While the present disclosure has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A seal (22) for a bearing (10), the seal comprising:
an annular body (22A) comprising polytetrafluoroethylene in a matrix comprising an elastomeric material matrix; and
a biasing member (24), the annular body (22A) being in communication with the biasing member (24) for urging a portion of the seal radially inward.

2. The seal of claim 1, wherein the seal defines a radially outward facing channel (25) therein and the biasing member (24) being positioned in the channel.

3. The seal of claim 2, wherein the biasing member (24) comprises at least one of a closed loop coil spring and an elastomeric O-ring extending around the channel.

4. The seal of any one of the preceding claims, wherein the seal defines an annular retaining ring (26) secured thereto.

5. The seal of claim 4, wherein the annular retaining ring (26) has an L-shaped cross section.

6. The seal of any one of the preceding claims, wherein the seal comprises an annular body portion (122A) and a head portion (144) connected to one another by a neck portion (141).

7. The seal of claim 6, wherein the head portion (144) defines at least one V-shaped cross section (142).

8. The seal of claim 7, wherein one of the at least one V-shaped cross sections is truncated and defines a flat engagement surface (290).

9. The seal of claim 6, 7 or 8, wherein a circumferential groove (140) is formed at a juncture of the neck portion and the annular body portion.

10. The seal of any one of the preceding claims, wherein the polytetrafluoroethylene constitutes 5 to 20 percent by weight of a combined weight of the PTFE and the matrix comprising the elastomeric material.

11. The seal of any one of the preceding claims, wherein the PTFE and the matrix comprising the elastomeric material has a durometer hardness of 50 to 70 on a Shore A scale.

12. The seal of any one of the preceding claims, wherein the elastomeric material comprises a synthetic rubber.

13. A bearing (10) comprising:
an outer race (12) having an interior area (14) defined by an arcuate interior surface (16);
an inner race (18) defining an arcuate exterior surface (20) that is complimentary to the arcuate interior surface (16), the inner race (18) being disposed at least partially in the interior area (14) and being rotatable relative to the outer race (12); and
a seal (22) according to any one of the preceding claims removably secured to a portion of the outer race (12), a portion of the seal slidingly engaging a portion of the inner race (18).

14. The bearing of claim 13, further comprising a PTFE liner (21) disposed between the inner race (18) and the outer race (12).

15. The bearing of claim 13 or 14, further comprising at least one recess (30) formed in the outer race (12), the at least one recess (30) being defined by an axially outward facing shoulder (32) and a radially inward facing surface (34) of the outer race (12), wherein an annular retaining ring as defined in claim 4 being one of friction fit and interference fit in the recess (30).
